Europäisches Patentamt

European Patent Office

Office européen des brevets

(11) Publication number: **0 209 221**
**A1**

# EUROPEAN PATENT APPLICATION

(21) Application number: **86303640.6**

(51) Int. Cl.⁴: **F 41 H 5/04**

(22) Date of filing: **13.05.86**

(30) Priority: **20.06.85 IL 75633**
**04.12.85 IL 77229**

(43) Date of publication of application: **21.01.87**
**Bulletin 87/4**

(84) Designated Contracting States: **AT BE CH DE FR GB IT LI LU NL SE**

(71) Applicant: **THE STATE OF ISRAEL MINISTRY OF DEFENCE RAFAEL - ARMAMENT DEVELOPMENT AUTHORITY, Hakirya Tel Aviv (IL)**

(72) Inventor: **Tarsi, Yami, 9a Zafririm Street, Carmel (IL)**
Inventor: **Ben-Moshe, David, 49 Shivtei Israel Street, Kiryat Bialik 27000 (IL)**
Inventor: **Rosenberg, Gideon, 20 Hanna Senesh Street, Kiryat Tivon 36000 (IL)**

(74) Representative: **Brown, John David et al, FORRESTER & BOEHMERT Widenmayerstrasse 4/I, D-8000 München 22 (DE)**

(54) An armour assembly for armoured vehicles.

(57) An armour assembly for armoured vehicles. In front of a conventional armoured wall (1) and spaced therefrom there is mounted a perforated wall (2) comprising a plurality of holes (4) evenly distributed thereover, the size of the holes and the distances between them being within the range of calibres of small-arms ammunition. The outer, perforated wall may be mounted by means of braces, struts (3) and the like or else with the intermediary of a corrugated, perforated metal sheet (8) comprising a plurality of holes of similar size and distribution as the holes of the perforated outer wall.

There are also provided perforated plates and perforated corrugated metal sheet for use in such assemblies.

ACTORUM AG

0209221

## "An armour assembly for armoured vehicles"

The present invention concerns armoured vehicles of the personnel carrier type that are used by infantry, and more specifically it concerns the design of the armour for such vehicles.

Personnel carriers must be so designed as to enable manoeuvering at the desired speed in various kinds of terrain while at the same time affording the personnel protection against various small-arm kinetic energy projectiles such as of rifles and semiautomatic and automatic firearms. In designing such a vehicle the designer is faced with two contradictors requirements: from the point of view of maximizing manoueverability the armour should be as light as possible which, however, impairs the protection it affords to the personnel, while from the point of view of personnel safety, the mass of the armour should be maximized which however impairs the manoeuverability of the vehicle. By present thinking designers invariably prefer the approach which maximizes manoeuverability of

0209221

the vehicle to the detriment of the safety of the personnel. This is an obvious disadvantage which, as experience has shown, has given rise to considerable casualties.

In view of the above it is the object of the present invention to provide a new type of armour for armoured vehicles which combines manoeuverability with a high degree of protection of the personnel against kinetic energy projectiles.

In accordance with the present invention there is provided an armour assembly for an armoured vehicle comprising an inner armour wall and at least one outer, perforated armour wall spaced therefrom, said perforated wall comprising a plurality of holes evenly distributed thereover, the size of the holes and the distances between them being within the range of calibres small arms ammunition.

The term "calibres of small-arms ammunition" used herein is meant to cover the range of small-arms ammunition calibre used at any time. Currently this range is between about 5.56 and 14.5 mm and consequently the size of the holes in the perforated plate and the distances between them will be within about this range. If, however, in the future small arms will be designed with ammunition of a different calibre, the design of the perforated plate(s) may be modified accordingly in accordance with the teachings of the present invention.

The outer, perforated armour plate in an armour assembly according to the present invention has the effect of deflecting the oncoming projectile from its original trajectory and causing at the same time the formation of an angle between the longitudinal axis of the projectile and its new, deflected trajectory - a so-called yaw angle - with the consequence that when the projectile hits the inner armour plate it is, as a rule, no longer capable of penetrating therethrough. This effect of the perforated armour plate results from the fact that statistically the great majority of all projectiles hitting the perforated plate impinge thereon in such a way that part of the projectile is braked by friction with the metal of the perforated armour plate while another part thereof passes through a hole without any friction. The probability that a projectile should pass unobstructed through a hole of the perforated plate is negligible even where the calibre of the hole is somewhat larger than that of the projectile.

If desired, an assembly according to the invention may comprise two or more perforated plates which may bear on or be distanced from each other.

In accordance with one embodiment of the invention said inner and outer walls are connected to each other by means of an intermediary corrugated and perforated metal sheet, the size of the holes of the metal sheet and the distances between them being within the range of calibres of small arms ammunition.

In an assembly according to the invention the inner armour wall is preferably of a light metal or alloy such as, for example, aluminium or an alloy thereof and may also be made of light composites such as are known in the art. The perforated plate in an armour assembly according to the invention is preferably made of a hard metal such as, for example, hardened stainless steel.

The invention also provides armoured vehicles comprising an armour assembly of the kind specified.

Furthermore, the invention provides for use in an armour assembly of the kind specified, a perforate metal plate comprising a plurality of holes evenly distributed thereover, the size of each hole and the distances between the holes being within the range of calibres of small-arms ammunition projectiles.

The invention further provides for use in an armour assembly of the kind specified, a corrugated perforated metal sheet with holes evenly distributed thereover, the size of the holes and the distances between them being within the range of calibres of

- 5 -

0209221

small-arms ammunition.

The holes in a perforated plate and corrugated perforated metal sheet forming part of an armour assembly according to the invention may be of any desired shape such as circular, oval, polygonal, etc.

The invention is illustrated, by way of example only, in the accompanying drawings in which:

Fig. 1 is a fragmentary, perspective view of an armour assembly according to the invention;

Fig. 2 is a diagrammatic illustration of a kinetic projectile impinging the perforated plate of an armour assembly according to the invention, showing the various operating forces; and

Fig. 3 is a diagrammatic section through an armour assembly according to Fig. 1, showing the deflection of an impinging projectile.

Fig. 4 is an exploded fractional view of an armour assembly according to another embodiment of the present invention.

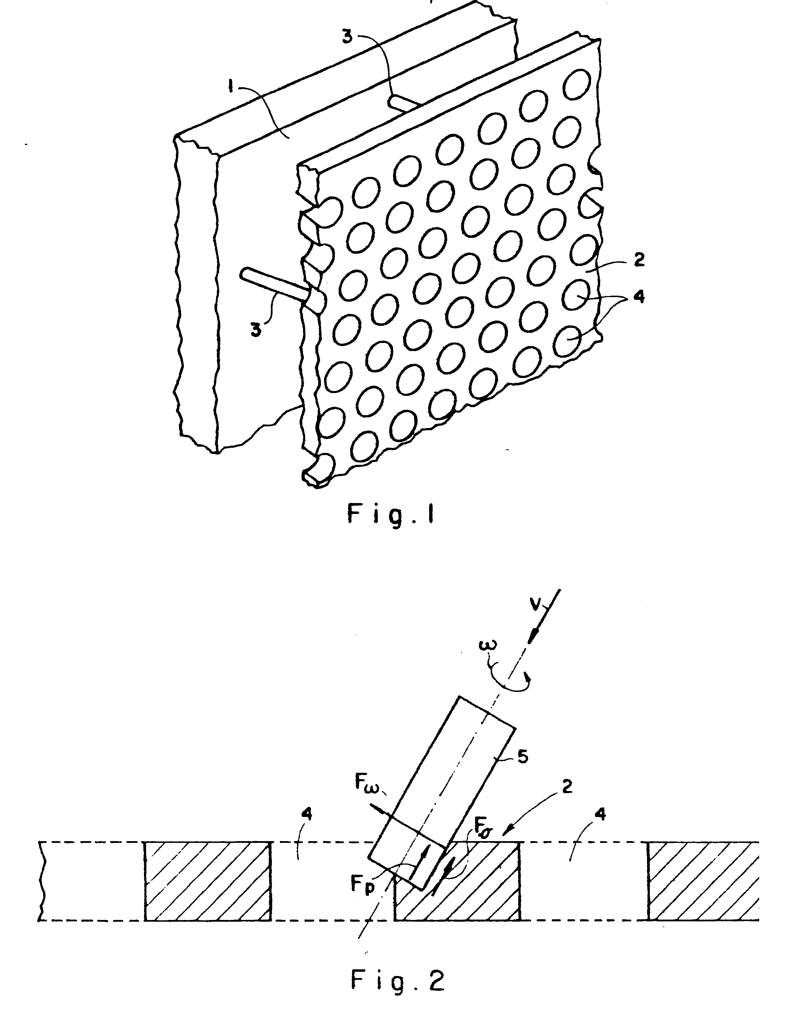

The armour assembly according to the invention, a fragment of which is shown in Fig. 1 comprises an inner armour plate 1 and an outer, perforated armour plate 2 held together by means of bars 3. The perforate plate 2 comprises a plurality of circular holes 4 evenly distributed thereover, the size of each hole 4 and the distances between the holes being within the range of the calibres of small-arms ammunition projectiles. For example, the diameter of holes 4 may be 11 mm and the distances between the holes about 5 mm; or, by another example, the diameter of the holes is 16 mm and the distances between the holes is about 8 mm.

Armour plate 1 may be made of aluminium and be for example about 40 mm thick and the perforated armour plate 2 may be made of hardened steel and be about 8 mm thick.

In the embodiment of Fig. 1 the holes 4 are arranged in horizontal and vertical rows with the holes of each row in either direction being staggered with respect to a neighbouring row. Obviously other arrangements by which the holes are evenly distributed over the perforated armoured wall 2 are conceivable within the teachings of the present invention. Moreover, holes 4 need not be circular and can instead be oval or polygonal.

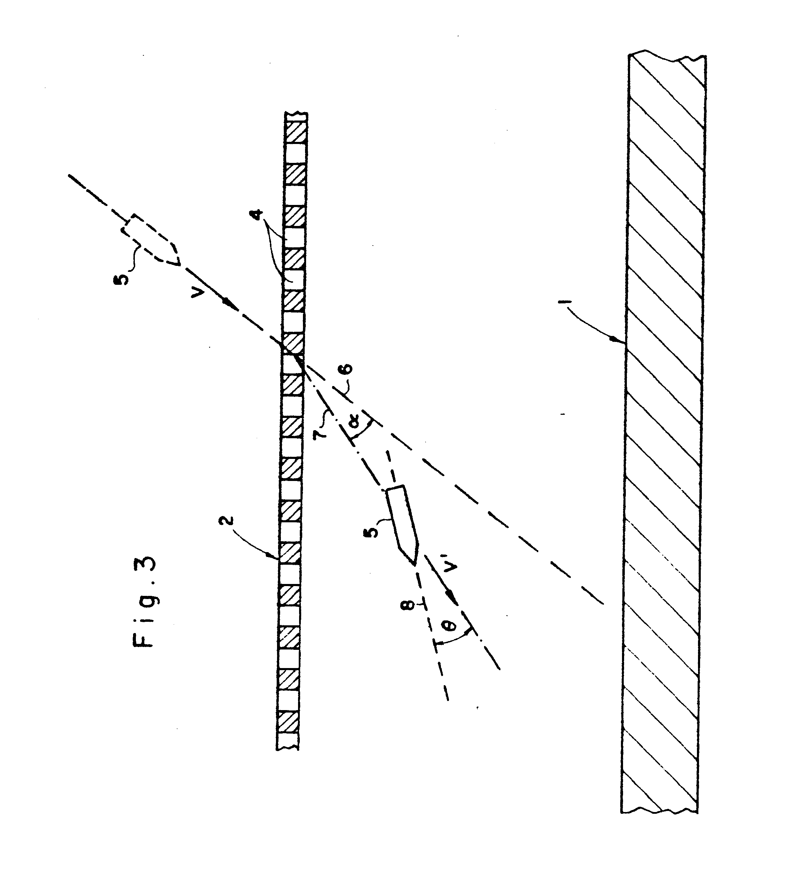

Fig. 2 shows diagrammatically and to a larger scale the occurrences when a projectile 5 impinges upon the outer, perforated armour wall 2. As shown the projectile arrives at a translatory velocity V in a trajectory which coincides with the vector V and at an angular velocity $\omega$. When part of the surface of projectile 5 hits a metal part of wall 2 three different forces act on the impinging projectile 5, these being a braking force $F_p$, a first friction force F and a second friction force Fω and these three forces give rise to turning moments whose effects will now be described with reference to Fig. 3.

In Fig. 3, an oncoming projectile 5 is shown in two positions, a first position in dashed lines showing it before it hits the outer, perforated plate 2 and a second position in drawn out lines showing the projectile after the passage across the perforated plate 2. As further shown, the oncoming projectile 5 which approaches the perforated armour wall 2 at the velocity V is upon passage across wall 2 deflected from its original trajectory 6 to a new trajectory 7, the two trajectories forming between them an angle α so that trajectory 7 intersects the inner, armour plate 1 at a more acute angle than the original trajectory 6. At the same time a yaw angle θ is formed between the axis 8 of the projectile and the new trajectory 7 with the consequence that when eventually the projectile 5 impinges on the inner armour wall 1 the collision is no longer head-on. As a result of all this the penetration power of projectile 5 is diminished and it is no longer capable of penetrating through the inner armour wall 1.

- 8 -

0209221

If desired, two or more perforated walls of the kind of wall 2 may be associated with an inner armour wall 1, which may bear on or be distanced from each other.

In addition to the deflection and formation of a yaw angle as described above, it may also happen that an impinging projectile is broken during its passage through the outer, perforated wall 2 which further reduces the penetration capacity of the projectile.

It has further been found in accordance with the present invention that the armour assembly according to the invention also reduces the penetration power of a shaped charge projectile, this being due to the fact that the detonation occurs remote of wall 1 at the outer, perforated wall 2. While this will, as a rule, not totally prevent the penetration of a jet resulting from the shaped charge explosion, the spalling effect due to the shock wave inside the vehicle wall will be considerably reduced.

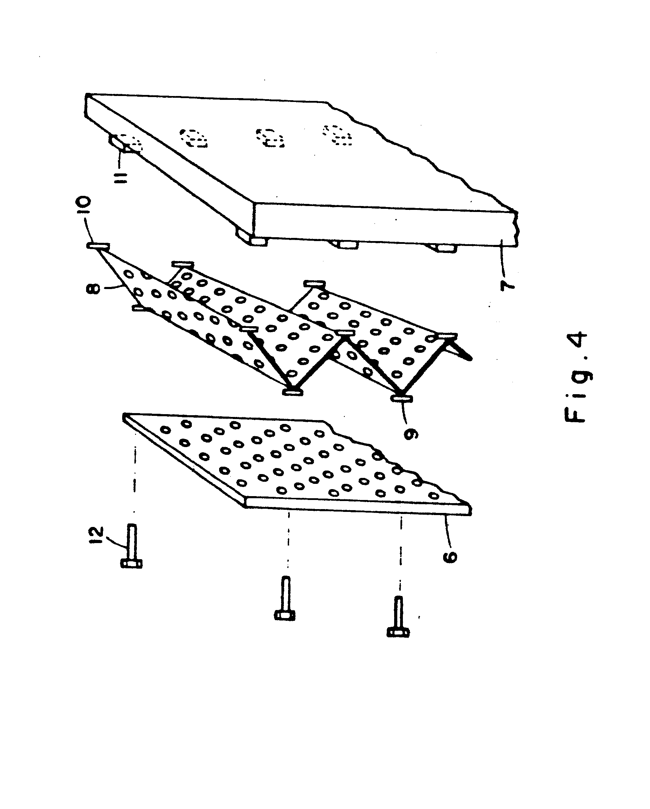

In the embodiment of Fig. 4 a perforated armour plate 6 is associated with an ordinary inner massive armour plate 7 with the interposition of an intermediary corrugated and perforated metal sheet 8.

For connecting an intermediary metal sheet 8 to both the outer perforated plate 6 and the inner

0209221

metal plate 2 it comprises a plurality of brackets 9 and 10, the former facing plate 6 and the latter plate 7. Likewise, plate 7 is provided with a plurality of brackets 11 each of which has a screw-threaded socket for cooperation with a screw-threaded male member 12.

For putting together the armour assembly according to Fig. 4, outer plates 6 are mounted on inner plates 7 with the interposition of intermediary metal sheets 8. To this end each outer plate 1 is aligned with an inner plate 7 with interposition of an intermediary corrugated sheet 8 in such a manner that each bracket 9 of a corrugated sheet 8 is placed over one of the holes in plate 6 while each bracket 10 of the corrugated sheet is caused to bear on a bracket 11 of plate 7. In this position the perforated plate 6 and the intermediary, corrugated sheet 8 are secured to each other and to plate 7 by means of connecting screw-threaded male members such as threaded bolts or screws, some of which engage brackets 9 while others extend as far as plate 7 and engage a bracket 11 thereof.

The embodiment of Fig. 4 has the advantage that by using a corrugated and perforated metal sheet for the connection of the outer and inner walls instead of braces, struts and the like the add-on weight is reduced and the deflecting effect is amplified. Thus, where in an embodiment according to Fig. 1 the add-on weight is about 40 kg/m$^2$, by using the same outer plates but mounting them with the aid of a corrugated and perforated metal sheet in accordance with Fig. 4 the add-on weight may be reduced to 20 kg/m$^2$.

The explanation of the amplification of the deflection of a kinetic energy projectile achieved by the embodiment of Fig. 4 is as follows:

As explained with reference to Fig. 3, the outer, perforated armour plate has the effect of deflecting the oncoming projectile from its original trajectory and causing at the same time the formation of an angle between the longitudinal axis of the projectile and its new, deflected trajectory - a so-called yaw angle - with the consequence that when the projectile hits the inner armour plate it is, as a rule, no longer capable of penetrating therethrough.

There are however cases in which an oncoming projectile flies normal to the outer, perforated armour plate and penetrates through a hole without touching the side walls thereof. Such a projectile will then impinge on the inner armour wall with full intensity as if there were no perforated outer wall. In accordance with the embodiment of Fig. 4 the probability of such an occurrence is drastically reduced in that any projectile that passes unaffected through the outer armour plate 6 will with high probability be deflected by the

0209221

intermediary perforated and corrugated metal sheet 8. Thus, if assuming that the probability of an unobstructed penetration of a projectile through the outer perforated armour plate 6 is 1/N, i.e. out of N hits one will pass axially through a hole of plate 6 without touching the side walls thereof, the probability that it will also pass unaffected through the intermediary corrugated perforated plate 8 is $1/N^2$.

The features disclosed in the foregoing description, in the following claims and/or in the accompanying drawings may, both separately and in any combination thereof, be material for realising the invention in diverse forms thereof.

0209221

## CLAIMS

1.      An armour assembly for an armoured vehicle comprising an armour wall (inner armour wall), characterized by at least one outer, perforated armour wall spaced from the inner armour wall and comprising a plurality of holes evenly distributed thereover, the size of the holes and the distances between them being within the range of calibres of small-arms ammunition.

2.      An armour assembly according to Claim 1 characterized by more than one perforated plate.

3.      An armour assembly according to Claim 1 characterized in that said outer, perforated armour wall is connected to said inner armour wall by means of an intermediary corrugated, perforated metal sheet comprising a plurality of holes, the size of the holes and the distances between them on both the outer wall and the intermediary corrugated metal sheet being within the range of calibres of small-arms ammunition.

4.      An armoured vehicle characterized by an armour assembly according to any one of Claims 1 to 3.

5.      For use in an armour assembly according to any one of Claims 1 to 3, a perforate metal plate characterized by a plurality of holes evenly distributed thereover, the size of each hole and the distances between the holes being within the range of calibres of small-arms ammunition projectiles.

6.      For use in an armour assembly according to Claim 3, a corrugated perforated metal sheet characterized by a plurality of holes evenly distributed thereover, the size of the holes and the distances between them being within the range of calibres of small-arms ammunition.

Fig.1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | CH-A- 23 749 (LEVEN)<br>* Whole document * | 1,4,5 | F 41 H 5/04<br>B 32 B 3/12 |
| X | FR-A- 909 792 (FABER)<br><br>* Page 1, lines 23-55; page 2, lines 23-74,93-100; figure 6 * | 1,2,4,5 | |
| Y | | 3,6 | |
| Y | FR-E- 50 680 (RENAUDIN)<br>* Whole document * | 3,6 | |
| Y | US-A-2 733 177 (MEYER)<br>* Column 4, lines 30-76; column 5, lines 1-22; figures 6-12 * | 3,6 | |

-----

**TECHNICAL FIELDS SEARCHED (Int. Cl.4)**

F 41 H

The present search report has been drawn up for all claims

| Place of search | Date of completion of the search | Examiner |
|---|---|---|
| THE HAGUE | 29-09-1986 | VAN DER PLAS J.M. |